(19) Europäisches Patentamt
European Patent Office
Office européen des brevets

(11) EP 3 032 214 B1

(12) EUROPEAN PATENT SPECIFICATION

(45) Date of publication and mention
of the grant of the patent:
**29.11.2017 Bulletin 2017/48**

(51) Int Cl.:
**F42B 12/72** (2006.01)   **B64F 5/00** (2017.01)
**F42B 12/36** (2006.01)   **F42B 12/74** (2006.01)

(21) Application number: **14833901.3**

(86) International application number:
**PCT/JP2014/056454**

(22) Date of filing: **12.03.2014**

(87) International publication number:
**WO 2015/019649 (12.02.2015 Gazette 2015/06)**

(54) **PROJECTILE FOR SIMULATING BIRD STRIKE**

GESCHOSS ZUM SIMULIEREN EINES VOGELSCHLAGS

PROJECTILE PERMETTANT DE SIMULER UN IMPACT D'OISEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2013 JP 2013162321**

(43) Date of publication of application:
**15.06.2016 Bulletin 2016/24**

(73) Proprietor: **IHI Corporation**
**Tokyo 135-8710 (JP)**

(72) Inventors:
• **FUKUSHIGE, Shinya**
**Tokyo 135-8710 (JP)**
• **USHIDA, Hirohisa**
**Tokyo 135-8710 (JP)**

(74) Representative: **Carpmael, Robert Maurice
Charles et al
Marks & Clerk LLP
90 Long Acre
London WC2E 9RA (GB)**

(56) References cited:
EP-A2- 2 131 173       WO-A1-2010/018107
JP-A- 2010 090 890     US-A- 5 763 819
US-A1- 2009 320 710    US-A1- 2011 192 314

• HEDAYATI REZA ET AL: "A new bird model and the effect of bird geometry in impacts from various orientations", AEROSPACE SCIENCE AND TECHNOLOGY, ELSEVIER MASSON, FR, vol. 28, no. 1, 5 October 2012 (2012-10-05), pages 9-20, XP028563731, ISSN: 1270-9638, DOI: 10.1016/J.AST.2012.09.002
• GEORGIADIS S ET AL: "Bird-strike simulation for certification of the Boeing 787 composite moveable trailing edge", COMPOSITE STRUCTURES , vol. 86 pages 258-268, XP002550586, ISSN: 0263-8223, DOI: 10.1016/J.COMPSTRUCT.2008.03.025 Retrieved from the Internet: URL:http://www.sciencedirect.com/science?_ob=MImg&_imagekey=B6TWP-4S2MJ0H-F-15&_cdi= 5568&_user=987766&_orig=search&_coverDate = 11%2F30%2F2008&_sk=999139998&view=c&wc hp=d GLzVzz-zSkzS&md5=4dfc940728e0ec2290463e4 ff e8aa050&ie=/sdarticle.pdf [retrieved on 2009-10-14]
• Richard Budgey: "THE DEVELOPMENT OF A SUBSTITUTE ARTIFICIAL BIRD BY THE INTERNATIONAL BIRDSTRIKE RESEARCH GROUP FOR USE IN AIRCRAFT COMPONENT TESTING", , 17 April 2000 (2000-04-17), XP055275734, Retrieved from the Internet: URL:http://www.int-birdstrike.org/Amsterda m_Papers/IBSC25 WPIE3.pdf [retrieved on 2016-05-24]

- **HEDAYATI, REZA: 'A new bird model and the effect of bird geometry in impacts from various orientations' AEROSPACE SCIENCE AND TECHNOLOGY vol. 28, no. ISSUE, July 2013, pages 9 - 20, XP028563731**

**Description**

**TECHNICAL FIELD**

The present invention relates to a projectile for simulating bird strikes.

**BACKGROUND ART**

A phenomenon where a bird collides with an airplane or is sucked into an engine at a time of takeoff or landing, namely a bird strike, gives rise to serious influences on the airplane. For assessing safety against bird strikes, tests in which euthanized bird carcasses are ejected by means of gas pressure onto airframe components or engine components have been used. Whereas these tests are still important as conclusive safety assessment, they may have a moral problem and are therefore unlikely to be used as routinely executable tests applied to components under development.

Proposed as an alternative is a test which uses a simulating projectile formed of a gel-like or jelly-like material. As a shape for the projectile, a column or a body of rotation of an ellipse similar to a column is used. The Patent Literature 1 discloses a related art.

Citation List

Patent Literature

PTL 1: International Publication No. WO 2010/018107

**SUMMARY**

TECHNICAL PROBLEM

Tests by simulating projectiles are valuable for testing components on the fore of an airplane, such as leading edges of wings or a fan of an engine, where birds may directly collide. According to studies by the present inventors, however, considering cases where birds collides with components behind these components, such as outlet guide vanes behind the fan of the engine or a low pressure compressor, it is found out that load profiles just after collisions outstrip actual conditions and therefore such tests are too severe.

SOLUTION TO PROBLEM

The present invention has been achieved in light of the aforementioned problem and is intended to provide a projectile enabling simulation of a bird strike, which is proper even to a component not directly colliding with a bird, such as outlet guide vanes or a low pressure compressor.

According to the present invention, a projectile for simulating a bird strike is comprised of a solid body having an outline of a columnar shape having a front end and a rear end, an opening opened at the front end, and a hollow elongated from the opening toward the rear end, which is formed of a gel-like or jelly-like material.

**ADVANTAGEOUS EFFECTS**

A projectile enabling simulation of a bird strike, which is proper even to a component not directly colliding with a bird, such as outlet guide vanes or a low pressure compressor, is provided.

**BRIEF DESCRIPTION OF DRAWINGS**

FIG. 1 is a schematic illustration of load profile curves just after collisions.
FIG. 2A is a sectional plan view of a projectile not forming part of the present invention according to a first comparative example.
FIG. 2B is a sectional plan view of a projectile not forming part of the present invention according to a second comparative example.
FIG. 3A is a sectional plan view of a projectile according to an embodiment of the present invention.
FIG. 3B is a sectional plan view of a projectile according to a modified example of the embodiment.
FIG. 3C is a sectional plan view of a projectile according to another modified example of the embodiment.
FIG. 4A is a sectional plan view of a projectile according to another embodiment of the present invention.
FIG. 4B is a sectional plan view of a projectile according to a modified example of the embodiment.
FIG. 4C is a sectional plan view of a projectile according to another modified example of the embodiment.
FIG. 5A is an elevational view schematically showing a state just before the projectile is ejected out.
FIG. 5B is an elevational view schematically showing a state where the projectile has been ejected.

**DESCRIPTION OF EMBODIMENTS**

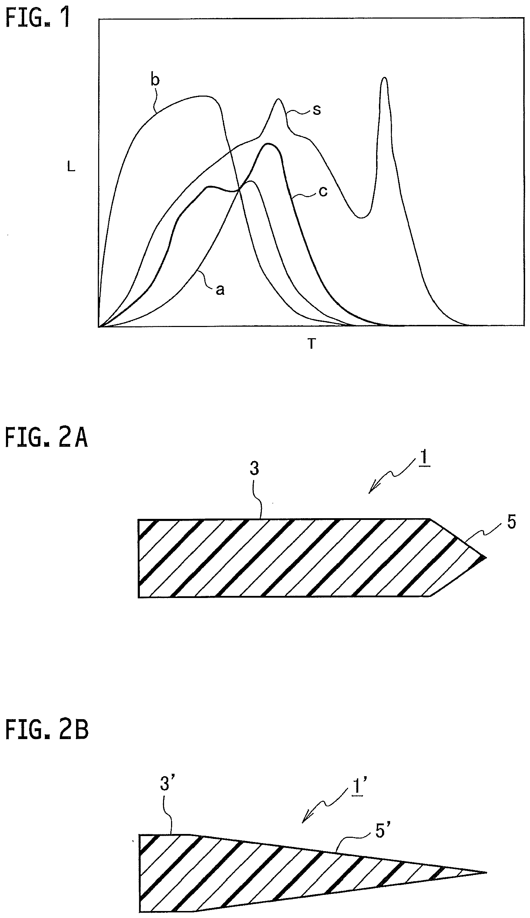

Exemplary embodiments will be described hereinafter with reference to the appended drawings. It is particularly noted that these drawings are not always drawn to scale exactly and therefore dimensional relations among elements are not limited to those shown therein. Further, while directions where a projectile is ejected are drawn to be rightward in FIGs. 2A-5B, this is not limiting the invention.

As described already, when a bird strike happens to a component facing forward in an airplane, such as a fan of an engine, the whole body of the bird collides with it. As the fan rotates at high speed, the body of the bird is chopped into small pieces. These small pieces are, along with airflow by the fan, sucked into the engine or a bypass duct and then pose secondary collisions with components such as outlet guide vanes.

When the entire process as described above is numerically analyzed by means of the publicly known particle method and calculated load profiles imposed on an outlet guide vane are turned into a graph, a line s drawn in FIG. 1 schematically depicts an example thereof. In FIG. 1, the horizontal axis depicts an elapsed time and the vertical axis depicts a load L. Increase in load just after a collision is thus relatively slow and a peak of the load, with undergoing some fluctuations, lasts for a relatively long time.

On the other hand, when a simulating projectile collides, a load imposed on a subject of the collision can be estimated by the following equation (1).

$$F \propto \rho \times A \times v^2 \quad - (1),$$

where $\rho$ represents a density of the projectile, A represents a cross section at a face perpendicular to a moving direction of the projectile, and $v$ represents a velocity. A time for which the load is imposed can be estimated by the following equation (2).

$$t = L/v \qquad - (2),$$

where $L$ is a length of the projectile.

When the projectile collides, its front end first gets in contact with the subject of collision and then imposes its mass thereon, and next the front end and subsequent portions in sequence collapse and impose these masses on the subject. In a case where the projectile is formed in a column or has a shape similar to a column, the cross sections $A$ are constant from the front end to the rear end. And also the velocity $v$ just after the collision is relatively large. It is therefore, from the equation (1), understood that a relatively large load is imposed on the subject of the collision from the very initial step just after the collision. More specifically, it is apparent that increase in load just after the collision comes to be steeper. The conventional test using the projectile of, or similar to, a columnar shape is therefore considered too severe as a collision test of outlet guide vanes or a low pressure compressor.

The present inventors have carried out studies as described below in regard to a shape of a projectile that can sufficiently simulate collision with components behind a fan.

It could be readily understood from the equation (1) that decrease in cross section A at the front end of the projectile results in moderating load increase just after the collision. Then considered was a case where a projectile 1 as shown in FIG. 2A collides with a subject.

The projectile 1 is comprised of a main body 3 of a columnar shape and a tapered portion 5 of a conical shape that tapers toward its front end. It is assumed that an apical angle of the tapered portion 5 is 90 degrees and its density $\rho$ is equal to that of a gelatin. A numerical analysis similar to that described above on the basis of this assumption produces a load profile described with a line b in FIG. 1. As compared with the columnar projectile, although a load increase just after a collision is more moderate and the line b approximates the line s to some degree, it is understood that the degree of increase in load just after the collision is still too steep.

Next considered was a projectile 1' as shown in FIG. 2B. The projectile 1' is comprised of a main body shorter than that of the projectile 1 and a longer tapered portion 5', in which its density $\rho$ is equal to that of the projectile 1. Similar numerical analysis produces a load profile described with a line a in FIG. 1. A load increase just after a collision is moderated excessively and it does not approximate the line s.

Even if any intermediates between the example of FIG. 2A and the example of FIG. 2B were sought, or any diameter and any total length thereof were tested, any of these results could not produce a line approximating the line s.

Causes of these results could be considered in the following way. While the tapered shape can reduce the cross section at the foremost end, as the load profile is limited to a quadric curve. Thus the increase in load just after the collision is excessively moderated.

More specifically, the studies by the present inventors demonstrated that variations of the outline of the projectile in a range of tapered forms cannot produce sufficient approximation to the line s in regard to both the load increase just after the collision and the duration of the load.

In turn, if the outline of the projectile separates from the columnar shape, it gives rise to difficulty in support by a sabot at a time of ejection, as described later. Outlines similar to a column, or any proper shape properly devised for convenience of ejection, are preferable.

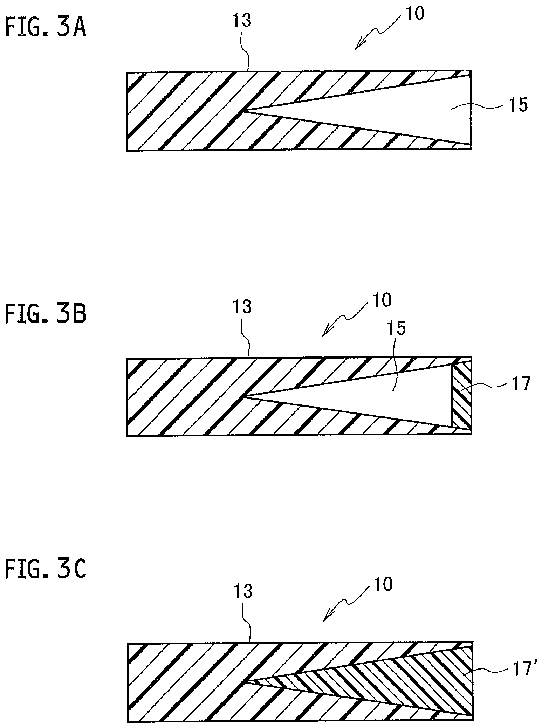

Based on the studies as described above, a projectile 10 of the present embodiment is, as shown in FIG. 3A, a solid body 13 having an outline of a columnar shape having a front end and a rear end, an opening opened at the front end, and a hollow 15 elongated from the opening toward the rear end. The solid body 13 is formed of a gel-like or jelly-like material.

The outline may be made to be a column for example. As described already, the columnar shape is advantageous in being supported by the sabot. Of course it may be any other shape, such as a prism, properly devised for convenience of ejection. The rear end of the solid body 13 may be formed as a face perpendicular to its axial direction, or may be a hemisphere or any other shape adapted for ejection.

The hollow 15 is for example formed in a tapered shape tapering toward the rear end. Sections of the solid body 13 are, from the front end to a rear end of the hollow 15, ring shapes in that solid sections are left only around the circular outline. This shape can reduce the cross section around the foremost end but maintain the total volume thereof to a considerable degree.

In addition the tapered shape as described above may be a cone. Or, it may be a pyramid. The tapered shape can be determined in accordance with the whole shape of the solid body 13.

The whole of the solid body 13 is formed of a gel-like or jelly-like material. An example of such a material is gelatin. As gelatin has a density close to that of muscles of birds and is also similar in viscoelasticity thereto, it is proper as a material for a projectile. The solid body 13 may be, as a whole, uniform in density, or alternatively may have a density gradient.

If the opening is left open, the vicinity of the opening may readily crush when the projectile 10 is ejected or collides. Thus the opening may be, as shown in FIG. 3B, closed by a support body 17. Further, as shown in FIG. 3C, the support body 17' may span the substantially total length of the hollow 15. The support bodies 17, 17' prevent deformation of the vicinity of the opening. To the support body 17 or 17' preferably applied is a material having a lower density than the material for the solid body 13 and a proper stiffness. As such a material exemplified is a resin such as foamed polyurethane.

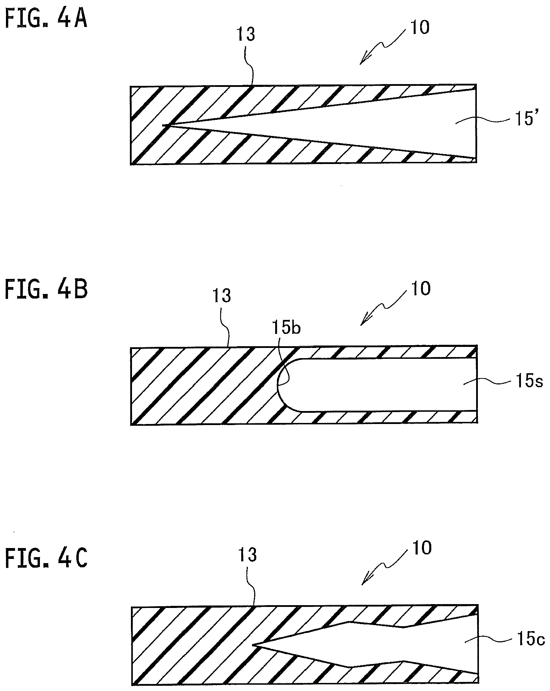

Various modifications about the shape of the hollow 15 may be possible. The hollow 15' may, for example, span the substantially total length of the solid body 13 as shown in FIG. 4A or, to the contrary, may be limited to a limited range around its front end. As longer the hollow is, increase in load just after the collision becomes more moderate. The length of the hollow can be determined depending on a preferred load profile.

Alternatively, like as a hollow 15s shown in FIG. 4B, its diameter could be uniform throughout the total length or formed in a shape similar thereto. For the dead end thereof applicable is a semispherical shape 15b or any other shape. These shapes could produce various load profiles that have non-linear or multi-step increase in load just after a collision.

Further alternatively, like as a hollow 15c shown in FIG. 4C, any more complex shape could be applied thereto. Further the density is not limited to be uniform but any density gradient could be given to the solid body 13. Proper combinations of shapes and density gradients allow design of various load profiles.

A numerical analysis based on the example shown in FIG. 3A, which is similar to those as described above, produces a load profile described with a line c in FIG. 1. In the line c, the portion of load increase just after a collision and the plateau-like portion where the load is kept substantially constant are relatively good in quality of approximation to the line s. These portions in the load profile curve are the most important portions in view of quality of simulation of collision. As the quality of approximation is quite good in these portions, the projectile of the present embodiment could be acknowledged to enable simulation of bird strikes on a component not directly colliding with a bird, such as outlet guide vanes or a low pressure compressor.

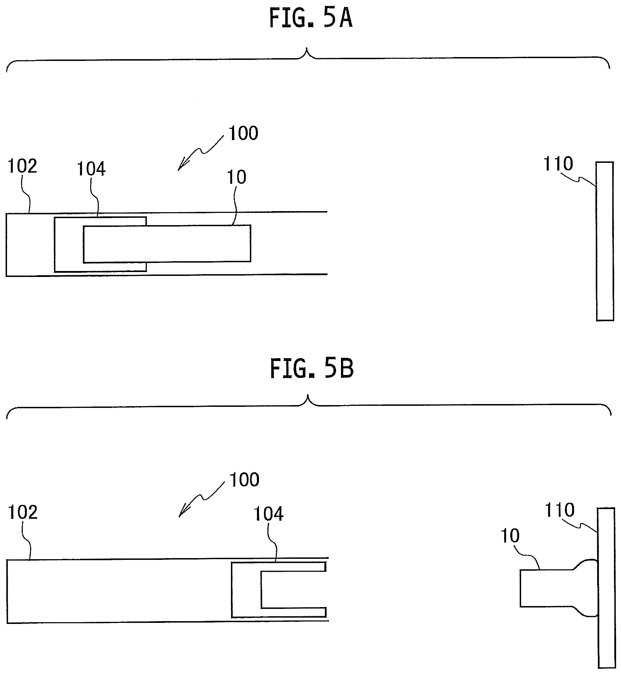

The projectile 10 of the present embodiment will be ejected by means of a gas gun 100 as shown in FIGs. 5A and 5B.

The gas gun 100 is generally comprised of a main body 102 as a column opened at its front end and a sabot 104 loaded in its interior. The sabot 104 has a concave of a columnar shape for example, in which the projectile 10 is loaded. A room inside the main body 102 and at the rear of the sabot 104 is filled with a compressed gas. In addition the gas gun 100 is comprised of a latch means for temporarily keeping the sabot 104 at the initial position shown in FIG. 5A and further a stopper means for preventing the sabot 104 from running out of the front end.

The gas gun 100 loaded with the projectile 10 and a test piece 110 as a whole are introduced into a vacuum chamber and are placed under a vacuum of several tens Pa. Alternatively it may be under a condition closer to the atmospheric pressure. As air resistance could be prominently reduced under a depressurized condition, high-speed ejection close to subsonic speeds can be readily achieved and deformation of the projectile caused by the air resistance is ignorable.

Under this condition, the latch means is released and then the sabot 104 is accelerated by the compressed gas pressure. As the stopper means stops the sabot 104 at the front end of the gas gun 100, the projectile 10 alone is ejected therefrom.

The ejected projectile 10 collides with the test piece 110 as shown in FIG. 5B.

As the projectile 10 has the columnar outline adapted for being supported by the concave portion of the sabot 104, it is suitable for ejection by the gas gun. Further as the projectile 10 has the hollow 15 in its interior, the sectional profile is regulated to enable good simulation of bird strikes proper for a component not directly colliding with a bird, such as outlet guide vanes or a low pressure compressor.

## INDUSTRIAL APPLICABILITY

A projectile enabling simulation of a bird strike, which is proper even to a component not directly colliding with a bird, such as outlet guide vanes or a low pressure compressor, is provided.

## Claims

1. A projectile (10) for simulating a bird strike, comprising:

    a solid body (13) having an outline of a columnar shape having a front end and a rear end, an opening opened at the front end, and a hollow (15) elongated from the opening toward the rear end,

the solid body (13) being formed of a gel-like or jelly-like material.

**2.** The projectile (10) of claim 1, wherein the hollow (15) has a taper shape tapering toward the rear end.

**3.** The projectile (10) of claim 2, wherein the taper shape is a cone or a pyramid.

**4.** The projectile (10) of any of claims 1 through 3, further comprising:

a support body closing the opening.

**5.** The projectile (10) of claim 4, wherein the support body is formed of a material being lower in density than the gel-like or jelly-like material.

**6.** The projectile (10) of claim 1, wherein the gel-like or jelly-like material comprises gelatin.

## Patentansprüche

**1.** Geschoss (10) zum Simulieren eines Vogelschlags, das Folgendes umfasst:

einen massiven Körper (13), der einen Umriss mit einer säulenförmigen Gestalt hat, die ein vorderes Ende und ein hinteres Ende, eine Öffnung, die an dem vorderen Ende geöffnet ist, und einen Hohlraum (15), der von der Öffnung zu dem hinteren Ende hin langgestreckt ist, hat, wobei der massive Körper (13) aus einem gelartigen oder gallertartigen Material geformt ist.

**2.** Geschoss (10) nach Anspruch 1, wobei der Hohlraum (15) eine Verjüngungsform hat, die sich zu dem hinteren Ende hin verjüngt.

**3.** Geschoss (10) nach Anspruch 2, wobei die Verjüngungsform ein Kegel oder eine Pyramide ist.

**4.** Geschoss (10) nach einem der Ansprüche 1 bis 3, das ferner Folgendes umfasst:

einen Stützkörper, der die Öffnung verschließt.

**5.** Geschoss (10) nach Anspruch 4, wobei der Stützkörper aus einem Material geformt ist, das in der Dichte niedriger ist als das gelartige oder gallertartige Material.

**6.** Geschoss (10) nach Anspruch 1, wobei das gelartige oder gallertartige Material Gelatine umfasst.

## Revendications

**1.** Projectile (10) pour simuler un impact d'oiseau, comprenant :

un corps solide (13) qui présente un profil d'une forme colonnaire qui comporte une extrémité avant et une extrémité arrière, une ouverture qui débouche au niveau de l'extrémité avant et une cavité (15) qui est allongée depuis l'ouverture en direction de l'extrémité arrière, le corps solide (13) étant formé à partir d'un matériau similaire à un gel ou similaire à une gelée.

**2.** Projectile (10) selon la revendication 1, dans lequel la cavité (15) présente une forme effilée qui est effilée en direction de l'extrémité arrière.

**3.** Projectile (10) selon la revendication 2, dans lequel la forme effilée est un cône ou une pyramide.

**4.** Projectile (10) selon l'une quelconque des revendications 1 à 3, comprenant en outre :

un corps de support qui renferme l'ouverture.

**5.** Projectile (10) selon la revendication 4, dans lequel le corps de support est formé en un matériau qui présente une densité plus faible que le matériau similaire à un gel ou similaire à une gelée.

**6.** Projectile (10) selon la revendication 1, dans lequel le matériau similaire à un gel ou similaire à une gelée comprend de la gélatine.

FIG. 1

FIG. 2A

FIG. 2B

FIG. 3A

FIG. 3B

FIG. 3C

FIG. 4A

FIG. 4B

FIG. 4C

FIG. 5A

FIG. 5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010018107 A